# EUROPEAN PATENT APPLICATION

(11) **EP 0 933 177 A2**
(43) Date of publication of application: **04.08.1999**
(21) Application number: 99660016.9
(22) Date of filing: 29.01.1999
(51) Int. Cl.: B27B 33/20, B23D 61/02

(54) **Profiling tool for a cant and a circular saw blade segment for it**

(30) Priority: 29.01.1998 FI 980194
(71) Applicant: Rummakko Oy, 40700 Jyväskylä (FI)
(72) Inventor: Haapasalo, Pauli, 40700 Jyväskylä (FI)
(74) Representative: Helke, Kimmo Kalervo

(57) **Abstract**

The invention relates to a profiling tool, which includes at least two disc-shaped blade frames (20.1, 20.1, 20.3), circular saw blade segments (21.1, 21.2) between these, and two chipping blades (3). The projection of each circular saw blade segment (21.1, 21.2) is fitted into the groove (32) of the blade frame (20.1, 20.2, 20.3), whereby it is easy to change them between the blade frames (20.1, 20.2, 20.3) that have been separated axially.

## Description

The invention relates to a profiling tool for a cant, which includes at least two disc-shaped blade frames that are rotatable on the shaft and bound to each other in an axially detachable way, and at least one profiling blade set tied to these. This set includes at least one circular saw blade segment between two blade frames and at least one chipping blade attached to one of these, and it is placed on the side of the saw line fixed by the circular saw blade segment. The profiling tool is intended to machine at least one cutting profile onto the wany corner of the cant for the subsequent resawing, so that the board that corresponds to each profile becomes fully edged in the resawing. The invention also relates to a circular saw blade segment that is used in the profiling tool for a cant.

Nowadays, when producing sawn timber, the producer wishes to store up the wood material in its most valuable form as accurately as possible. Due to this, the logs that arrive at the sawmill are usually debarked, after which four plane surfaces are formed in two stages by the cant chippers. Wanes are left at the corners of the cant, which have earlier been removed in a separate stage by leading the corresponding boards or strips of wood to an edging stage. Nowadays the producer wants to machine the wane off already before the resawing. This stage is called profiling, and by it, optimal measurements of the cant are achieved having regard to the resawing stage.

The wood material that is removed from the cant by shaping, i.e. with the help of chipping blades, is in the form of wood chips and is essentially more valuable than saw dust. Chip has its own quality requirements and an attempt is made to regulate the chipping process in such a way that the chip produced will be suitable for boiling pulp. The saw dust as well as the bad-quality chip is normally used for energy production, the compensation for which is, however, significantly lower than that for pulp chip.

However, the production of good-quality pulp chip by cant chippers leads to the trace of the chipping blades being quite strongly visible in the timber, unless it is removed. This problem has been solved in cant chippers by a separate sawing stage. The saw blade can also be attached to the cant chipper itself, whereby the saw blade forms a visible surface onto the timber.

In a corresponding way, it has been thought desirable to treat the wany cant from its corners by the chipping blades, which form one or more cutting profiles onto the corners. The trace of the chipping blades is also here eliminated by sawing, which is situated on the sides of the chipping blades.

Sågsverkmaskiner AC from Vislanda in Sweden has produced sawing machines, in which a structure according to the introduction has been used. In the beginning, only one profiling blade set was used, which included two chipping blades and two circular saw blade segments. These formed the side surface of a board separated from this point. Instead of one cutting profile, two cutting profiles became to be used. In order to achieve this, a wide saw blade segment has been placed in addition to the first profiling blade set by the side of that first set. However, the functioning of this blade segment proved to be so bad that it could not be taken into use.

In time, the blades of the profiling blade set are used up and they need to be changed or reset. In the machine sold under the aforementioned "VISLANDA" trademark, the chipping blades are attached to the frame part with wedged parts. The circular saw blade segments are, on the other hand, attached by long pivots in between the frame parts, from where they can be removed by separating the frame parts axially a long way from each other. This has, however, proved in practice to be a very difficult step to do, wherefore a new solution has been searched for.

In Finnish patent No. 89468, a combination of a resaw and a related edging cutter is presented. By this combination, the wanes of the cant can be machined, but the trace of the edging cuter that is used for removing the wanes is clearly visible on the side surface of the resulting board. When producing timber of good quality, all the edges of the timber need be sawn.

The object of this intention is to achieve an improved profiling tool, which can achieve working faces of good quality and in which it is easier than before to service and change the blades. The characteristic features of a profiling tool according to the invention have been presented in the adjoining patent claim 1 and the characteristic features of the circular saw blade segment used in that tool have been presented in patent claim 9. The projection of the attachment arrangement according to the invention is most profitably in the circular saw blade segment and the recess is correspondingly in the blade frame. For these purposes, the circular saw blade segment is most profitably formed out of a saw blade segment that is almost as that known and of an arched part that is attached onto that, the arched part being most profitably formed to be symmetric. In this way, it can receive the saw blade segment onto its chosen side in order to form a right- or left-handed circular saw blade segment. The circular saw blade segment according to the invention, with its attachment dollies forms a replaceable component, which speeds up and makes easier the adjustment and servicing of the profiling tool. The other profitable forms of application and advantages of the invention will become evident later in relation to the examples of application.

In the following, the invention is explained by reference to the adjoining figures, which present some of the profiling tools according to the invention and their use on a sawing line.
- Figure 1: presents a precipitation line, which is equipped with a profiling unit according to the invention,
- Figure 2: presents the profiling unit according to the invention in more detail,
- Figures 3a and 3b: present the longitudinal sections of a profiling tool according to the invention with two different adjustments,
- Figure 4: presents the blade frame in the middle, and profiling blades that have been set onto it,
- Figure 5: presents the parts of a circular saw blade segment according to the invention in more detail,
- Figures 6a and 6b: present chipping blades of two different widths,
- Figure 7: presents a saw blade segment as a visualisation in perspective,
- Figure 8: presents the third blade frame of the profiling tool in figures 3a and 3b as a visualisation in perspective.

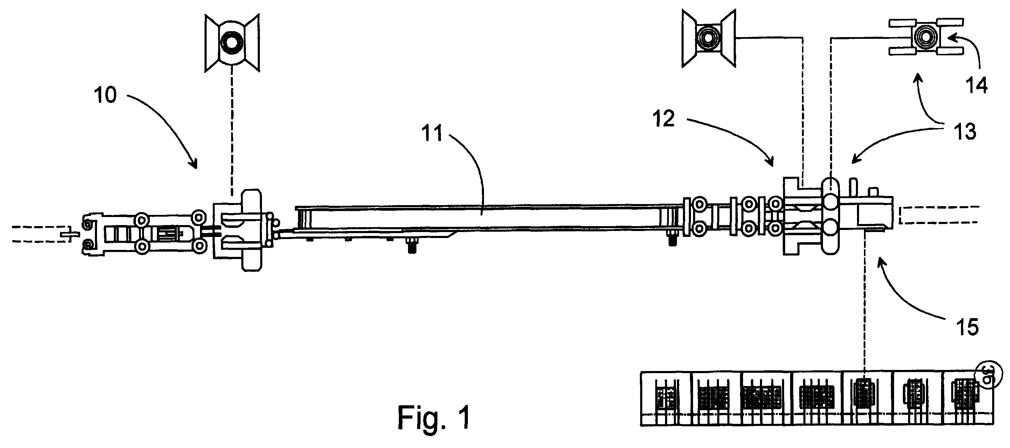

In the first stage, two working faces are shaped with the first cant chipper 10, figure 1, onto the log on the sawing line that produces sawn timber. Thereafter the log is tipped down onto transporter 11, which takes the log to another cant chipper 12. Also a profiling unit 13 and a resaw 15 have been integrated with this chipper. With cant chippers 10 and 12, a cant is produced out of the log, the cant having wanes at its corners. Profiling unit 14 and resaw 15 have been made compatible with each other in a manner shown later. Profiling unit 14 machines cuttings at the wanes of the cant, the cuttings corresponding to the division widths of the resaw.

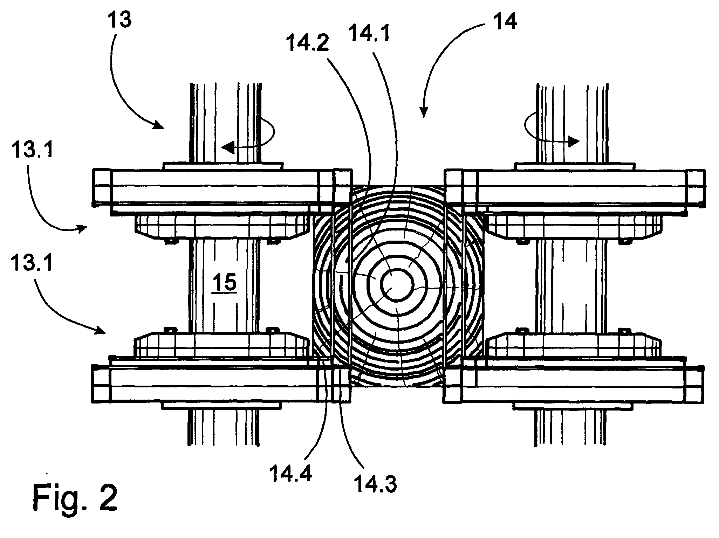

Figure 2 presents the functioning of profiling unit 13 and of the divisions saw that follows it. In the figure, the cant has been marked with reference number 14 and its wanes with reference number 14.0. Sawing gaps 14.1 and 14.2 that are created in the resawing process are also marked schematically in figure 2, separating boards L1 and L2 from the cant. The profiling unit has profiling tools 13.1 and 13.1' in pairs on both sides. These are rotated on shafts 15 and they can be moved axially according to the measurements of the cant (not shown).

In figure 2, profiling units 13.1 and 13.1' have been presented schematically so that they machine cutting profiles 14.3 and 14.4 from the cant. These cover the whole of the wane in every corner. Especially in the following phase, the side surfaces of the boards L1 and L2 that are to be separated by the resaw are sawn with the blade solution presented later, whereby the more uneven trace of the chipping blades disappears. The profiling tools in accordance with figure 2 have two profiling blade sets, which are placed axially one after the other and stepwise within different radii. It is visible from figure 2 that the thickness of board 12 is determinable as the difference of the measurements of the radii of the profiling blade sets. Other measurements can be changed somewhat by changing the mutual distances of the profiling tools.

When the blades are used up or when it is seen desirable to change the measurements of the profiling tools, the tool needs to be opened in order to change the blades.

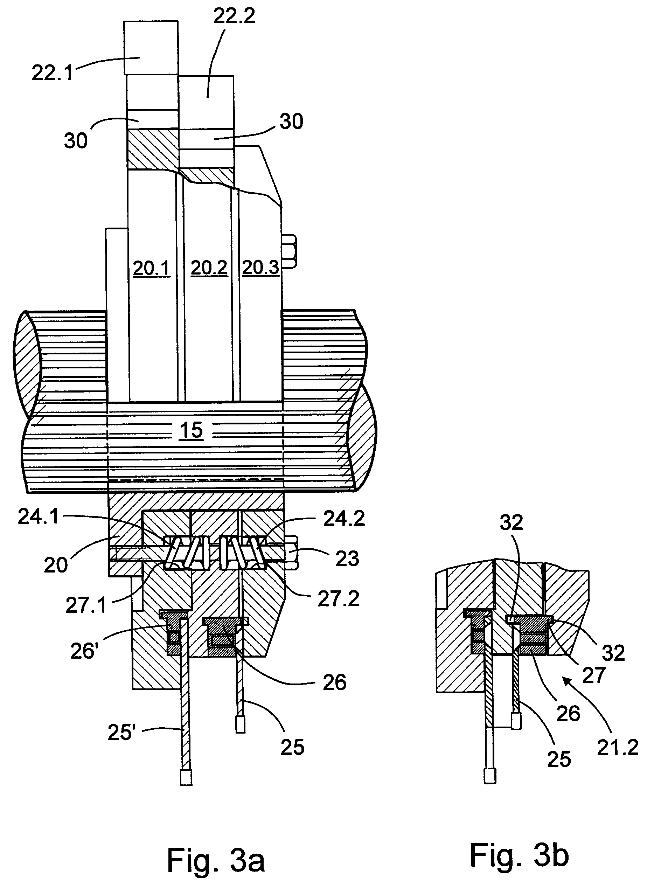

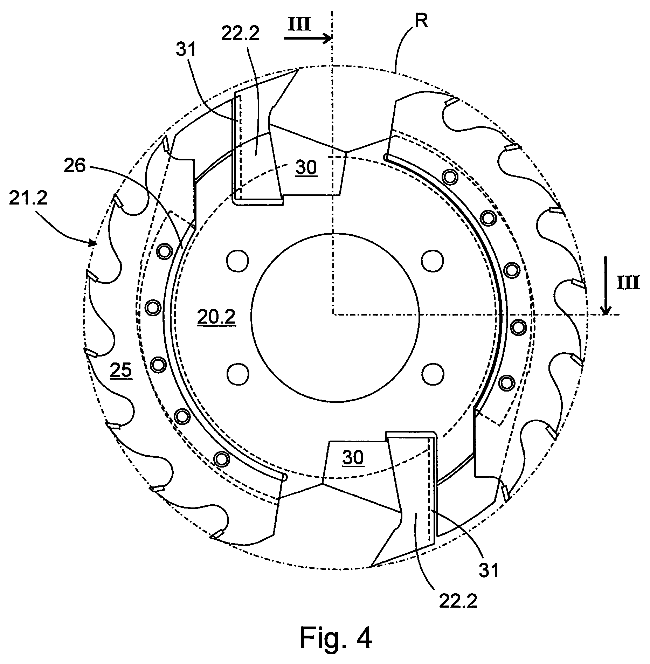

The structure of the profiling tool, and the alternative blade setting of the profiling width is presented in figures 3a and 3b. Figure 3a is a section along line III-III of figure 4.

The profiling tool has been constructed on three blade frames 20.1, 20.2 and 20.3 and on support bushing 20. These are tied together with bolt 23. Support bushing 20 is able to move axially on groove shaft 15. The rotational moment is transferred from the groove shaft and through the bushing onto the blade frames, onto which the actual machining blades have been attached. Axial transportation devices are connected to bushing 20, by which devices the profiling tool is positioned as desired (not shown). In order to change the machining blades, there is no need to remove the profiling tool from the shaft when the blade frames 20.1, 20.2 and 20.3 are separated from each other by opening bolt 23, whereby springs 24.1 and 24.2 that have been placed in spring hollows 37.1 and 37.2 push the blade frames away from each other. Thus the circular saw blade segments 21.1 and 22.2, which have been placed between the blade frames, are easy to remove from their places and to change quickly into sharpened and new blades. In the same way, it is easier to change chipping blades 22.1 and 22.2 when the blade frames are open.

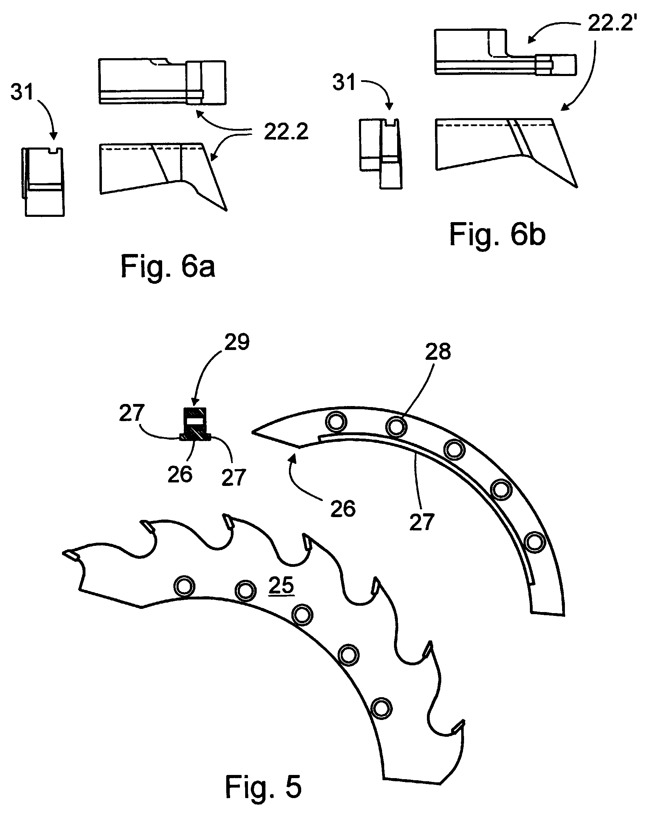

Circular saw blade segments 21.1 and 21.2 are positioned in hollows that are formed into blade frames 20.1 and 20.2. The adjustment of the circular saw blade segment 21.1 of the first profiling blade set is always the same. On the contrary, the adjustment of the second circular saw blade segment 22.2 can happen in two ways. In figure 3a, circular saw blade segment 21.2 has been set at the wide shaping width, whereby board L2 is, in accordance with figure 2, narrower in a corresponding manner. The adjustment in figure 3b corresponds to figure 2, in which a circular saw blade segment 21.2' that is uneven-handed in relation to figure 3a is used, which corresponds to a narrower shaping width, and board L2 is correspondingly wider. Different chipping blades correspond to the wider and narrower shaping width in accordance with figures 3a and 3b, the blades being presented later in figures 6a and 6b. It is essential that circular saw blade segments 21.2 and 21.2 (and correspondingly 21.2') are changeable components. They have each been formed out of a circular saw blade segment 25 and an arched part 26, which have been attached to each other with the help of screws (not shown). It is essential that the circular saw blade segment includes a projection 27, which fits into groove 32 in the blade frame. Circular saw blade segments 21.2 or 21.2' may be fitted in such a way that the projection is placed in groove 32 of either the blade frame 20.2 that is in the middle or the outer blade frame 20.3.

Figure 4 presents blade frame 20.2 that is in the middle and chipping blades 22.1 and 22.2 and circular saw blade segments 21.2 that are fitted onto it. There is most profitably an even number of both of these, especially two pieces. Chipping blades 22.2, as also chipping blades 22.1 of the first frame, are attached in a known manner with a wedge device 30 onto the corresponding frame. The way of attachment and the structure of the circular saw blade segments 21.1 are essential to this invention. These segments have been fitted into the groove of the blade frame and they may be lifted away in the axial direction if the blade frames are separated from each other. The peripherical length of the toothing of the circular saw blade segments is here about 110°, but usually 90 - 150°, most profitably 100 - 130°. The toothing extends 25 - 75% of the corresponding width of the sawing gap of the resaw, most profitably 40 - 60% of said measure, towards the rotational direction of the circumference. In accordance with the figure, the sawing line of the circular saw blade segments is fixed somewhat eccentrically in relation to the radius R determined by the chipping blades.

The parts of the circular saw blade segments are the saw blade segment 25 that is formed as an arch and an arched part 26, in the cross-sectional picture of which projections 27 on both sides and a threaded attachment hole 29 are visible. Saw blade segment 25 is attached with the help of screws onto the chosen side of the arched part 28, whereby either a left- or a right-handed circular saw blade segment is achieved. This segment forms a quickly changeable component. The saw blade segment includes hard metal points in a known manner upon each tooth. When placing the saw blade segment 25 in the arched part 26, projection 27 is left active on the opposite side and it may be set into the groove 32 of the aforementioned blade frame.

The chipping blades are here of a type that is known as such. It is possible to use either a wider or a narrower chipping blade 22.2 or correspondingly 22.2' on the blade frame in the middle. The chipping blades contain a groove 31 on their back, which is placed in the corresponding rail of the blade frame.

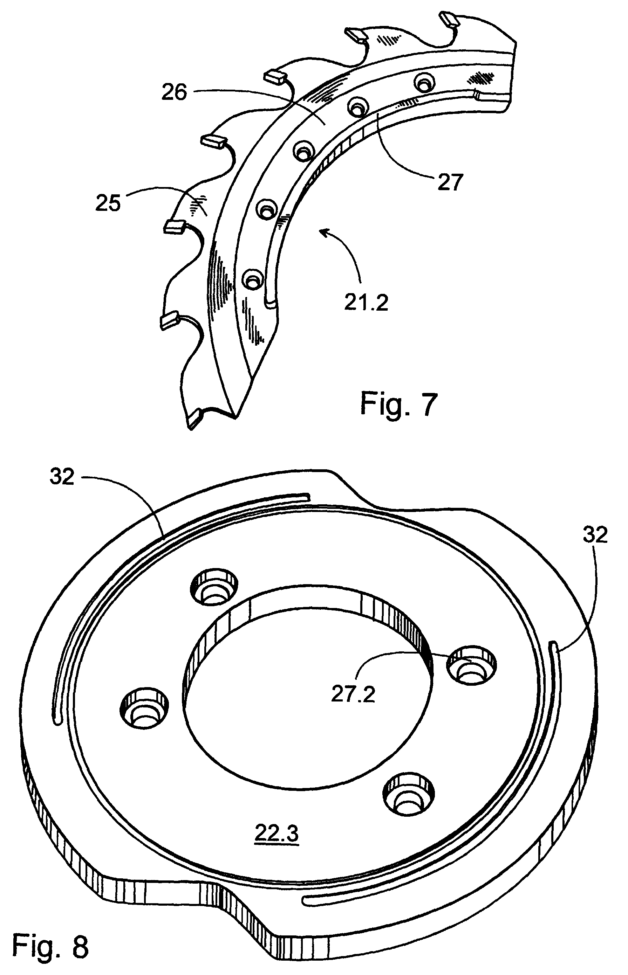

In figure 7, the changeable circular saw blade segment is presented as a visualisation in perspective. The same circular saw blade segment may be set the other way around in the opposite handed profiling tool. Thereby the same circular saw blade segments fit onto the profiling tools 13.1 and 13.1' in accordance with figure 2.

In accordance with figure 3b, the projection 27 of circular saw blade segment 21.2 is placed into the groove 32 of the outer blade frame 20.3, which groove is visible in detail in figure 8. Such an arch-shaped recess 32 supports well the circular saw blade segment. Yet the segment will only come off by separating the blade frames axially from each other and by lifting the projection 27 off this groove 32.

## Claims

1. Profiling tool for a cant (14), which includes at least two disc-shaped blade frames (20.1, 20.2, 20.3) that are rotatable on the shaft (15) and bound to each other in an axially detachable way, and at least one profiling blade set tied to these that includes at least one circular saw blade segment (21.1, 21.2) between two blade frames (20.1, 20.2, 20.3) and at least one chipping blade (22.1, 22.2) attached to one of the blade frames (20.1, 20.2), being placed on the side of the saw line fixed by the circular saw blade segment (21.1, 21.2), and which profiling tool is intended to machine at least one cutting profile (14.1, 14.2) onto the wany corner (14.0) of the cant (14) for the subsequent resawing, so that the board (L1, L2) that corresponds to each profile becomes fully edged in the resawing, characterised in that the saw blade segment (21.1., 21.2) and at least one of the blade frames (20.1, 20.2, 20.3) that support it include a mutual attachment arrangement that contains at least at least one axial attachment projection (27) in one of these parts and a corresponding holding recess (32) in another part, whereby the blade frames (20.1, 20.2, 20.3) that are tied against each other push the attachment arrangement of the circular saw blade segment (21.2, 21.2) that is between them onto place so that the said attachment projection (27) is placed in its holding recess (32)

2. Profiling tool according to patent claim 1, characterised in that the attachment projection (27) of the attachment arrangement is in the circular saw blade segment (21.1, 21.2) and the groove (32) is in the blade frame (20.1, 20.2, 20.3).

3. Profiling tool according to patent claim 1 or 2, characterised in that it includes two profiling blade sets that have been at different depths and axially one after the other, each of them containing at least one circular saw blade segment (21.1, 21.2) and at least one chipping blade (22.1, 22.2).

4. Profiling tool according to patent claim 3, characterised in that it includes three disc-shaped blade frames (20.1, 20.2, 20.3) that have been tied one after the other, whereby the circular saw blade segments (21.1, 21.2) of the first profiling blade set have been fitted between the first and the second blade frame (20.1, 20.2, 20.3) and the circular saw blade segments (21.1, 21.2) of the second profiling blade set have been fitted between the second and third blade frame (20.1, 20.2, 20.3).

5. Profiling tool according to one of patent claims 1 - 4, characterised in that there is an even number of circular saw blade segments (21.1, 21.2) and chipping blades (22.1, 22.2), most profitably two pieces per each profiling blade set.

6. Profiling tool according to patent claim 5, characterised in that the saw toothing (34) of the circular saw blade segments (21.1, 21.2) of at least one profiling blade sets covers 90 - 150° of the circumference, most profitably 100 - 130°.

7. Profiling tool according to patent claim 5 or 6, which is intended to be fitted in front of the resaw (15) of the cant (14), characterised in that the saw toothing (34) of the circular saw blade segments (21.1, 21.2) of each profiling blade set extends 25 - 75% of the corresponding width of the sawing gap (14.1, 14.2) of the resaw, most profitably 40 - 60%.

8. Profiling tool according to one of patent claims 1 - 7, characterised in that each circular saw blade segment (21.1, 21.2) includes a disc-shaped saw blade segment (25) and an arched part (26) attached to that, which together form a changeable component.

9. Circular saw blade segment (21.1, 21.2), which is intended to be attached to a rotatable tool, and which includes a disc-shaped and arched saw blade segment (25) and attachment devices in order to fit it onto the frame of the tool, characterised in that the attachment devices include an arched part (26) attached to the saw blade segment (25), which part includes an axial projection part (27) in order to be fitted into the groove (32) of the blade frame (20.1, 20.2, 20.3) of the tool.

10. Circular saw blade segment (21.1, 21.2) according to patent claim 9, characterised in that the arched part (26) is symmetrical and the saw blade segment (25) is set to be attached onto the chosen side of the arched part (26), whereby, according to this, either a right- or left-handed circular saw blade segment (21.2, 21.2) is achieved.
